# EUROPEAN PATENT APPLICATION

(11) **EP 1 754 635 A1**
(43) Date of publication of application: **21.02.2007**
(21) Application number: 05466011.3
(22) Date of filing: 11.08.2005
(51) Int. Cl.: B60R 21/215

(54) **Instrument panel with integrated airbag cover and method of its manufacturing**

(71) Applicant: Peguform Bohemia k.s., 460 78 Liberec (CZ)
(72) Inventor: Stefek, Pavel, 460 01 Liberec 14 (CZ); Soukup, Bretislav, 460 01 Liberec 2 (CZ); Landa, Frantisek, 463 31 Chrastava (CZ)
(74) Representative: Belfin, Vladimir

(57) **Abstract**

The invention involves an instrument panel with an integrated air-bag cover (1) that on air-bag deployment separates with most of its perimeter away from the stiffening panel (2) and subsequently it swings open. In the stiffening panel (2) the air-bag cover (1) and the adjacent region of the stiffening panel (2) are reinforced with a sheet metal reinforcement (4) having the openings (7), profiled embossments (8a, 8b), and spacer pads (9a, 9b, 9c). Placement of the openings (7) and embossments (8a, 8b) along the reinforcement (4) is non-uniform in accordance with requirements of the cover (1), its hinge connecting section (3), and of adjacent region of the stiffening panel (2) in terms of local stiffness, strength, and thermal expansion. During the thermoplastic injection moulding of the stiffening panel (2), the sheet metal reinforcement (4) is inserted into an empty mould and after closing the mould the sheet metal reinforcement (4) is encapsulated by the stiffening panel (2) material that fills entire cavity of the mould.

## Description

### Field of the Invention

The invention relates to a passenger car interior and to front seat retaining passenger protection system in motor vehicles.

### Background of the Invention

An air-bag is a vital part of complex protection for the motor vehicle occupants. The air-bag for the front seat passenger protection is usually located within the instrument panel, as close as possible to the point, where, in case of a vehicle frontal crash, the head of the passenger wearing a safety belt is aiming. From point of view of the air-bag operation, it is essential for the air-bag cover to open reliably and easily in result of inflating pressure and so clear a way to the air-bag for its deployment into a passenger space, without causing any damage to the air-bag. No parts or debris, which could cause passenger's injury or any air-bag damage, are allowed to separate from the cover or from the instrument panel components. The absolute functional reliability at acceptable costs is required. Solely for the aesthetic reasons, it is usually required that the air-bag may not be visible before its deployment and its cover should merge or form a harmonic assembly with the instrument panel by means of its shape, height and surface.

The existing configurations of the instrument panel with the air-bag cover can be divided into the two principal concepts:
a) The air-bag cover is an entirely separate component and it is not a part of the stiffening panel. The cover is only physically held in a position at the air-bag opening mouth in the instrument panel in a suitable way and swung or slid away on air-bag deployment. This concept usually represents more complex configuration with a relatively larger number of components.
b) The integrated cover is an integral part of the stiffening panel, so it must be first separated with most of its perimeter from the instrument panel on air-bag deployment as it is forced by the inflating air-bag pressure, to be subsequently swung open and let the air-bag go out. The cover can be either of one-part design and swing as a whole to one side (typically toward a windscreen) or of the two-part design with each cover-half swinging to its side. This concept of the cover, integrated into the instrument panel, provides the possibility of simpler configuration with fewer parts, but it is connected with considerable mechanical loads onto the cover and its surrounding.

A reinforcement of the one-part concept of the air-bag cover with the adjacent stiffening panel is necessary, since the crack, separating the cover from the stiffening panel, shall grow exactly along the cover perimeter as it is defined by the notches or also a perforation line. The crack shall not branch out or grow off the cover perimeter line, to avoid any formation of debris that could cause damage to air-bag or any injuries to the passengers.

However, one section of the cover perimeter remains permanently joined with the stiffening panel and it works as a cover hinge. The reinforcement can be either full-area, reinforcing the entire cover and the adjacent stiffening panel region, or partial, reinforcing only a part of the cover and region adjacent to cover hinge.

Connection of the reinforcement with the cover and with the stiffening panel can be achieved in two different manners: either by pressing the reinforcement into the back side of the cover and stiffening panel, then the reinforcement becomes an integral part of the stiffening panel and the cover, or by using the mechanical fasteners, so that the reinforcement remains a separate part. An uniform arrangement of the openings throughout the reinforcement is normally used with the pressed-in reinforcements. The opening sizes are selected to allow good penetration of thermoplastic material of the stiffening panel into the reinforcement.

The pressed-in reinforcement, and at the same time, reinforcement of the cover and of the adjacent stiffening panel region can be made of perforated sheet metal (see for example DE 4437773, US 5564733, JP 2000318557, US 6565115), metal grid (such as in US 5382047), textile (DE 19962551, GB 2359283), knitted fabric or mesh tissue (DE 19935625), fibres or yarn etc., that means any ductile, tough and strong structure capable to join to the cover and the stiffening panel and to serve as a cover hinge simultaneously.

Thermal expansion of the stiffening panel and cover material is always higher than that of the reinforcement material by order of magnitude, while the mutual surface adhesion of the both materials is very poor. Any change in temperature is resulting in high internal stresses between the reinforcement, the stiffening panel and the cover, which in turn may, besides the frequently unacceptable distortions of the cover and the stiffening panel, result in a failure of the reinforcement joint to the cover and stiffening panel. The stiffening panel, including the air-bag cover, cannot be, for a number of reasons, equally stiff everywhere, so neither are its thermal dilatations in its different locations. The more or less uniform stiffness and the uniform thermal dilatations throughout the area of the uniformly punched sheet metal reinforcement do not match well to irregularities in the stiffening panel and the cover, which worsens the problems with dilatations and distortions, as well as with a bearing strength of the joint of the reinforcement to the cover and adjacent region under extreme load from the inflating air-bag. Therefore a separation or delamination of the reinforcement from the cover and stiffening panel material often takes place with risk of causing damage to the air-bag, since the strength of pressed-in joint of the reinforcement to the stiffening panel and the cover is very limited. Besides that, the reinforcement pressing into the surface of a completed stiffening panel represents an additional manufacturing operation, which makes the instrument panel production more expensive.

### Summary of the Invention

The invention relates to a configuration of the instrument panel with an integrated air-bag cover, by a concept of one-piece cover integrated into the stiffening panel involved into the instrument panel, and which merges an harmonic assembly with the instrument panel, in terms of its shape, height and surface.

Local decrease of stiffening panel wall thickness or presence of notches or perforation line along the cover perimeter, together with increased stiffening panel wall thickness in immediate vicinity of the cover is not sufficient for proper crack growth to provide reliable cover separation from the stiffening panel without debris formation. Practical experience show that at least a substantial part of the cover, cover hinge connection section, and of adjacent stiffening panel must be reinforced with a strong reinforcement, e.g. made of sheet metal with embossments and openings, improving both flexural stiffness and integrity as well as the strength of its joint with the cover and stiffening panel. When air-bag deployment takes place, this one-piece cover separates from the stiffening panel with most of its perimeter as a result of pressure inflating the air-bag and swings out towards a windscreen along the connection section constituting a cover hinge. As the cover separates from its surrounding solely in result of pressure inflating the air-bag, actuating perpendicularly to cover surface, the cover and its surrounding are loaded extremely.

The invention consists in a principle, that the air-bag cover, integrated into the instrument panel, which is based on a stiffening panel, is together with the hinge connection section and with adjacent region of the stiffening panel, reinforced by an internal sheet metal reinforcement, equipped with number of openings and profiled embossments, wherein on manufacturing the stiffening panel this reinforcement is inserted into an empty injection mould and after closing the mould it is encapsulated by thermoplastic material of the stiffening panel.

The stiffening panel, including the integrated cover and internal metal reinforcement, is made by injection moulding of thermoplastic material into a metal mould. First the reinforcement is inserted into an empty mould, the mould is closed, and then a injection of a necessary amount of thermoplastic melt takes place to fill the cavity of the mould completely and to encapsulate the reinforcement. This method of joining the reinforcement to the plastic cover outperforms the hitherto used method of the subsequent pressing the reinforcement into the stiffening panel and cover backs in the best achievable quality of joint and in productivity. The assembly is entirely made up in a single operation of the stiffening panel manufacturing, so the production costs are as low as possible. To prevent a displacement of the reinforcement from its precise position during injection of the plastic melt, the reinforcement has numerous spacer pads for a safe arrest of the reinforcement in the mould.

The instrument panel (including air-bag cover) cannot be, for a number of reasons, equally stiff everywhere, so neither should the reinforcement be equally stiff throughout all its area. This can be achieved by suitable sizes of the openings and by arranging them non-uniformly throughout the reinforcement, and further by using the profiled embossments as well as by designing the proper reinforcement overall size and outer contour. Arrangement and sizes of the openings in the reinforcement, the embossments profile, their dimensions and positions, and reinforcement outer contours are all a result of a compromise between spatial conditions (the stiffening panel and air-bag cover design) and the requirement to minimize residual internal stresses caused by a difference in thermal expansions of the reinforcement material and the stiffening panel material, requirement to prevent undesireable distortions of the cover and its vicinity which could threaten proper air-bag function, and finally requirement to resist the stresses in a process of cover separation and of subsequent swinging out, to prevent the cover and its vicinity from disintegration and undesirable releasing of the debris. Such a solution of the air-bag cover, integrated into the instrument panel, results in a minimum number of components, the lowest possible production costs, perfect air-bag function with no air-bag damaging and with maximum resistance against releasing parts of the cover or the stiffening panel away.

### Brief Description of the Drawing

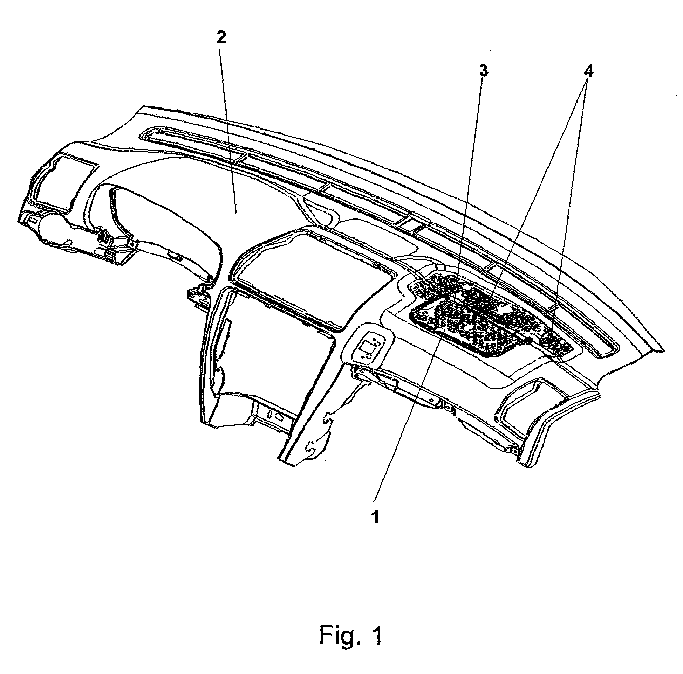

- Fig. 1: shows the instrument panel involving the stiffening panel with the integrated air-bag cover,

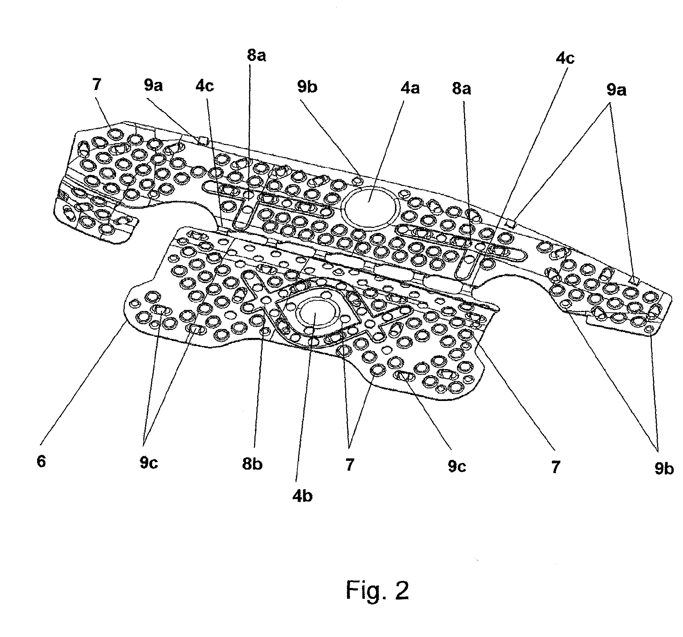

- Fig. 2: shows the sheet metal reinforcement reinforcing the cover, the hinge connection section and adjacent region of the stiffening panel,

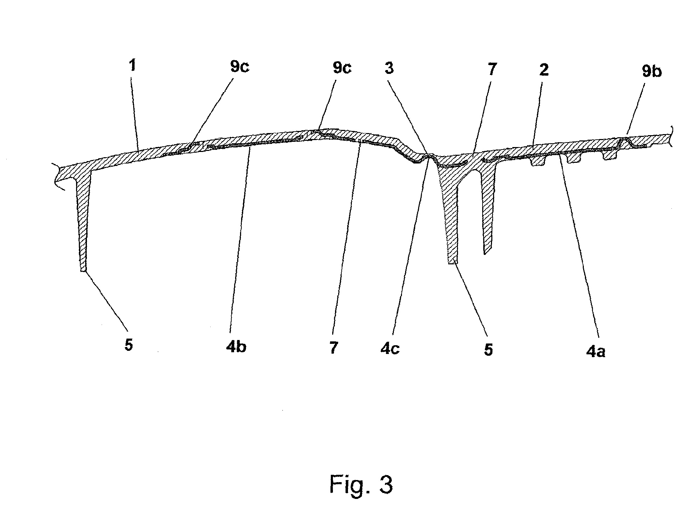

- Fig. 3: shows a cross-section through the air-bag cover, parallel with a vehicle longitudinal axis, joining the hinge connection section with adjacent region of the stiffening panel.

### Description of the Exemplary Embodiment of the Invention

The stiffening panel 2 with an integrated air-bag cover 1, containing a metal reinforcement 4, is made of a polypropylene-based material by injection moulding into a metal mould, wherein on manufacturing this reinforcement 4 is inserted first into an empty cavity of the stiffening panel 2 mould, and after closing the mould it is encapsulated by melted stiffening panel 2 material, that fills entire cavity of the mould.

Therefore the die-pressed sheet metal reinforcement 4 has not only the openings 7 and profiled embossments 8a, 8b in both of its parts 4a, 4b, but also the spacer pads 9a, 9b, 9c to arrest the reinforcement 4 in proper position in the injection mould to prevent displacing of the reinforcement 4 from its precisely determined position during the melt injection. The spacer pads 9a, 9b, 9c are of three different styles for this reinforcement design: the edge spacer-pads 9a are punched bent-out strips at the reinforcement 4 edge, along the reinforcement area there are also the spheroidal spacer pads 9b and the bean-shaped spacer pads 9c that are embossed by die pressing. They are arranged non-uniformly throughout the reinforcement 4 area, according to requirements of a melt flow in the mould.

The integrated air-bag cover 1 approximately of rectangular shape is thus a part of the stiffening panel 2. On air-bag deployment it must separate from the stiffening panel 2 along the most of its perimeter and swing out around the joining section constituting the hinge connection section 3. The substantial parts of the cover 1, hinge connection section 3, and of the adjacent stiffening panel 2, are reinforced with the inner strong ductile sheet metal reinforcement 4, having non-uniformly arranged profiled embossments 8a, 8b and the openings 7 that improve both flexural stiffness and integrity as well as the strength of bond to the cover 1 and stiffening panel 2 to provide controlled crack growth for separating the cover 1 from the stiffening panel 2 properly without breaking off any debris or chips, forced by inflating air-bag pressure on air-bag deployment only.

The cover 1 edge is perforated. The reinforcement 4 is a single die-pressed piece of sheet metal made up of two sections, 4a and 4b, connected with each other via bridges 4c that reinforce the joining section constituting the cover 1 hinge connection section 3 on the stiffening panel 2. The bridges 4c must be sufficiently flexible to prevent the reinforcement 4 breaking out from the cover 1 or from the adjacent stiffening panel 2 on air-bag deployment and, at the same time, they must be sufficiently strong to prevent them from failure on cover 1 separation and on swinging out.

The one section 4a of the reinforcement 4 is of elongated shape (parallel to the windscreen) and it is anchored in the stiffening panel 2 at length far greater (about twofold) than that of connecting section, i.e. hinge connection section 3, of the air-bag cover 1 and on its width, using maximum free space towards the ventilation channels near the windscreen to distribute the loading forces transmitted via the cover 1 hinge connection section 3 to maximum portion of the stiffening panel 2. This part 4a of stiffening panel is on its back, also reinforced with the plastic stiffening panel 2 structure itself, by means of ribs that work as supports for a raised rim - a frame 5 around the cover 1 outer region.

The other part 4b of the reinforcement 4 is anchored in air-bag cover 1. It does not reach the separation line around the air-bag cover 1 perimeter, yet it reinforces most of the cover 1. The contour of this section 4b of the reinforcement 4 copies the cover 1 edge at a distance, having a more complex shape, optimised in conjunction with the non-uniform arrangement of the openings and profiled embossments for the minimum internal stresses resulting from differences in thermal expansions of the reinforcement 4 and base material, achieving maximum cover 1 stiffness and strength. This particular design is characterized by prolonged remote corners 6 resembling vanes.

Besides the openings 7 there are U-profiled embossments 8a in the elongated part 4a of the reinforcement 7, which form two wide letters T on its area, and which increase the longitudinal, as well as the lateral flexural stiffness of this section of the stiffening panel 2.

Besides the openings 7 there are similar U-profiled embossments 8b in the other section 4b of the reinforcement 4, reinforcing the cover 1, forming two intercrossed, mutually inverted, widely opened U-characters. The flat circular areas with no openings in the middle of each section, 4a and 4b, are used for robotic manipulation with the reinforcement 4.

### Field of the Application

The invention is pertinent for production of the plastics parts of interiors of the motor vehicles, equipped with a retaining passenger protection system including an air-bag.

### List of reference sign

- 1: air-bag cover
- 2: stiffening panel
- 3: hinge connection section
- 4: reinforcement
- 4a: reinforcement section reinforcing the stiffening panel
- 4b: reinforcement section reinforcing the air-bag cover
- 4c: reinforcement section reinforcing the hinge connection section, bridges
- 5: frame around the air-bag cover opening
- 6: elongated corners of the reinforcement section in the air-bag cover
- 7: reinforcement openings
- 8a: profiled embossments of the reinforcement section reinforcing the stiffening panel
- 8b: profiled embossments of the reinforcement section reinforcing the air-bag cover
- 9a: edge spacer-pads for adjusting the reinforcement in a cavity of the mould
- 9b: ball-shaped spacer-pads for adjusting the reinforcement in a cavity of the mould
- 9c: bean-shaped spacer-pads for adjusting the reinforcement in a cavity of the mould

## Claims

1. Instrument panel with integrated air-bag cover (1), based on the plastic stiffening panel (2), **characterized by** the fact, that the cover (1), together with the hinge connection section (3) and adjacent region of the stiffening panel (2), is reinforced with an inner sheet metal reinforcement (4) equipped with a number of openings (7) and embossments (8a, 8b), wherein the reinforcement (4) is encapsulated in a material of the stiffening member (2).

2. Instrument panel according to the claim 1 **characterized by** the fact, that an arrangement of the openings (7) in the reinforcement (4) area is non-uniform.

3. Instrument panel according to the claim 1 **characterized by** the fact, that an arrangement of the embossments (8a, 8b) in the reinforcement (4) area is non-uniform.

4. Instrument panel according to the claim 1 **characterized by** the fact, that there are more spacer pads (9a, 9b, 9c) in the reinforcement (4) area, wherein their arrangement is non-uniform.

5. Method of manufacturing the instrument panel according to the claim 1 **characterized by** the fact, that the plastic stiffening panel (2) is manufactured by injection moulding simultaneously together with the cover (1) wherein the reinforcement (4) is initially inserted into an empty stiffening panel (2) mould, and after closing the mould, it is encapsulated by the stiffening panel (2) material that fills entire cavity of the mould.
